# EUROPÄISCHE PATENTSCHRIFT

(11) **EP 3 786 458 B1**
(45) Veröffentlichungstag und Bekanntmachung des Hinweises auf die Patenterteilung: **21.06.2023**
(21) Anmeldenummer: 20192660.7
(22) Anmeldetag: 25.08.2020
(51) Int. Cl.: F04D 29/54, F04D 29/52, F01P 5/06

(54) **LÜFTERHUTZE FÜR EIN FAHRZEUGSYSTEM**
FAN CASING FOR A VEHICLE SYSTEM
CAPOT DE VENTILATEUR POUR UN SYSTÈME DE VÉHICULE

(30) Priorität: 02.09.2019 DE 102019213195
(43) Veröffentlichungstag der Anmeldung: 03.03.2021
(73) Patentinhaber: Deere & Company, Moline, IL 61265 (US)
(72) Erfinder: Illg, Paul, 68163 Mannheim (DE); Berg, Alexander, 68163 Mannheim (DE); Sananikone, Phouphadeth, 68163 Mannheim (DE); Singh, Bhuvaneshwar, 68163 Mannheim (DE); Joshi, Amruta, 68163 Mannheim (DE); Kieser, Martin, 68163 Mannheim (DE)
(74) Vertreter: Dehnhardt, Florian Christopher

(56) Entgegenhaltungen:
- EP-A2- 1 520 977
- EP-A2- 1 865 207
- EP-A2- 2 067 952
- US-A- 5 427 502

## Beschreibung

Die Erfindung betrifft eine Lüfterhutze für ein Fahrzeugsystem.

Derartige Lüfterhutzen werden beispielsweise in einer Kühlanordnung zur Kühlung des Antriebsmotors eines Nutzfahrzeugs zwischen einem Motorkühler und einem Axiallüfter eingesetzt. Dabei weist die Lüfterhutze einen Unterdruckanschluss auf, über den ein externer Luftstrom mit Partikeln angesaugt wird, da der Unterdruckanschluss mit einem niederdruckseitigen Ansaugbereich des Axiallüfters zusammenwirkt. In einem zweistufigen Luftfilter vorabgeschiedene Partikel können auf diese Weise von dem Luftfilter abgesaugt und über die Lüfterhutze und den Axiallüfter in die Umgebung abtransportiert werden.

EP 2067952 A2, US 5427502 A, EP 1865207 A2 und EP 1520977 A2 offenbaren je eine Lüfterhutze nach dem Stand der Technik.

Der vorliegenden Erfindung liegt die Aufgabe zugrunde, die technische Funktionalität einer Lüfterhutze zu verbessern bzw. zu erweitern.

Diese Aufgabe wird durch eine Lüfterhutze mit den Merkmalen des Patentanspruchs 1 gelöst.

Die Lüfterhutze für ein Fahrzeugsystem weist einen in einer Umfangsrichtung verlaufenden Gehäuserahmen auf, welcher von einer Anschlussöffnung zum Ansaugen externer Luft und/oder externer Partikel durchsetzt ist. Die Anschlussöffnung ist Bestandteil eines an der Lüfterhutze ausgebildeten Unterdruckanschlusses. Der über den Unterdruckanschluss angesaugte Saugstrom (externe Luft und/oder externe Partikel) kann den Gehäuserahmen entlang einer Strömungsrichtung durchströmen. Ausgehend von der Anschlussöffnung erstreckt sich ein Anschlussstutzen für die anzusaugende Luft und/oder anzusaugenden Partikel in Richtung außerhalb des Gehäuserahmens. In eine entgegengesetzte Richtung, d.h. in Richtung innerhalb des Gehäuserahmens erstreckt sich ausgehend von der Anschlussöffnung eine Trennwand.

Die Trennwand hat einerseits eine technische Leitungs- und Führungsfunktion für den in den Gehäuserahmen eintreffenden Saugstrom, so dass in funktionaler Kombination mit dem externen Anschlussstutzen auf in den Gehäuserahmen von außen hineinragende Strömungsbauteile wie etwa Saugstutzen, Saugtrichter und dergleichen verzichtet werden kann. Hierdurch wird die Leistungseffizienz (z.B. Kühlleistung) einer die Lüfterhutze flankierenden und einen Unterdruck erzeugenden Vorrichtung (z.B. Axial- oder Radiallüfter einer Kühlanordnung des Fahrzeugsystems) verbessert, da keine störenden Bauteile der Lüfterhutze im niederdruckseitigen Ansaugbereich dieser Vorrichtung vorhanden sind. Außerdem können bei einem Verzicht auf die vorgenannten Strömungsbauteile weiter unerwünschte Effekte vermieden werden. Im Falle eines Lüfters (z.B. Axial- oder Radiallüfter, Hauptventilator) können beispielsweise unerwünschte Geräusche vermieden werden, welche infolge einer Positionierung der Strömungsbauteile an dem Lüfter entstehen würden. Zudem vereinfacht der Wegfall von zusätzlichen Strömungsbauteilen die Konstruktion und somit die Montage der Lüfterhutze auch bei beengten Einbauverhältnissen.

Weiterhin bildet die Trennwand eine Art rückspringende Stufe für den durch die Anschlussöffnung in den Gehäuserahmen hineingesaugten Luft- und/oder Partikelstrom (Saugstrom). Hierdurch ist die Lüfterhutze konstruktionstechnisch einfach in der Lage, den genannten Saugstrom und weitere Luftpfade (z.B. einen Wärmetauscher, die Lüfterhutze und einen Lüfter durchströmende Kühlluft) voneinander zu trennen bzw. zu entkoppeln. Genauer gesagt bildet ein Freiende der Trennwand eine Strömungsabrisskante, die in Bezug auf die Richtung des Saugstroms einen Strömungsabriss in einem Bereich unmittelbar hinter der Trennwand und damit eine Trennung der Strömungspfade vor und dahinter bewirkt. Dies verbessert die Funktionalität der Lüfterhutze hinsichtlich des gewünschten Absaugeffektes.

Der Gehäuserahmen verläuft in Umfangsrichtung insbesondere in sich geschlossen und unterstützt hierdurch einen mechanisch stabilen Aufbau der Lüfterhutze. Der Anschlussstutzen und die Trennwand sind einstückiger Bestandteil der Lüfterhutze und somit mit dem Gehäuserahmen einstückig verbunden.

Bei dem Fahrzeugsystem handelt es sich insbesondere um ein Nutzfahrzeug aus dem Landwirtschafts-, Forst- oder Baumaschinenbereich.

Weitere vorteilhafte Ausgestaltungen der erfindungsgemäßen Lüfterhutze gehen aus den Unteransprüchen hervor. Vorzugsweise ist die Trennwand bezüglich der Strömungsrichtung hinter dem in den Gehäuserahmen strömenden Saugstrom angeordnet. Hierdurch kann technisch einfach und effizient die Generierung eines Unterdrucks in Strömungsrichtung vor der Trennwand unterstützt werden.

Eine Entkopplung unterschiedlicher Luftströme durch die Trennwand wird weiter verbessert, wenn letztere etwa parallel zu einer durch die Umfangsrichtung aufgespannten Rahmenebene des Gehäuserahmens angeordnet ist. Im Falle einer Kühlanordnung des Fahrzeugsystems verläuft die Trennwand dann etwa entlang der Hochrichtung des Fahrzeugsystems.

Vorzugsweise erstreckt sich der Anschlussstutzen oder seine Mittellängsachse ausgehend von der Anschlussöffnung bezüglich der Strömungsrichtung nach hinten geneigt. Durch eine entsprechend geometrisch dimensionierte Neigung und ggf. auch Realisierung von Biegeradien am Anschlussstutzen können scharfe und somit störende Umlenkungen des Saugstromes entlang seines Strömungspfades vermieden werden. Die bezüglich der Strömungsrichtung nach hinten geneigte Erstreckung des Anschlussstutzens trägt dazu bei, dass der Anschlussstutzen hinsichtlich seiner Relativanordnung zu einer die Lüfterhutze flankierenden und einen Unterdruck erzeugenden Vorrichtung (z.B. Axiallüfter einer Kühlanordnung des Fahrzeugsystems) entkoppelt ist. Somit kann die Lüfterhutze sehr raumsparend dimensioniert werden.

In einer weiteren bevorzugten Ausführungsform erstreckt sich der Anschlussstutzen oder seine Mittellängsachse ausgehend von der Anschlussöffnung in oder entgegen der Umfangsrichtung des Gehäuserahmens geneigt. Mit anderen Worten ist der Anschlussstutzen in einer durch die Umfangsrichtung aufgespannten Rahmenebene des Gehäuserahmens in oder entgegen der Umfangsrichtung geneigt. Hierdurch können ebenfalls unnötige und folglich den Wirkungsgrad vermindernde Umlenkungen des Strömungspfades innerhalb der Lüfterhutze vermieden werden. So kann beispielsweise die Rotationsrichtung eines mit der Lüfterhutze kombinierten Axiallüfters berücksichtigt werden.

Die Lüfterhutze wird insbesondere als eine Ansaugstufe an einem Axiallüfter einer Kühlanordnung des Fahrzeugsystems verwendet. Dabei ist die Lüfterhutze vorzugsweise zwischen einem Wärmetauscher und dem Axiallüfter angeordnet. Der Anschlussstutzen der Lüfterhutze korrespondiert mit einem niederdruckseitigen Ansaugbereich des Axiallüfters. An diesem Ansaugbereich wird Unterdruck zum Ansaugen und Abtransportieren externer Partikel erzeugt. Die Partikel werden beispielsweise von einem Luftfilter zu dessen Reinigung abgesaugt. Dabei ist der Anschlussstutzen über eine geeignete Saugleitung mit dem Luftfilter verbunden. Folglich kann die Lüfterhutze als eine technisch einfach aufgebaute Ansaugstufe für ein kontrolliertes Absaugen von externen Partikeln dienen.

Der Luftfilter selbst wird beispielsweise zur Reinigung der einem Verbrennungsantrieb (z.B. Dieselmotor) zugeführten Verbrennungsluft (z.B. Ladeluft eines Turboladers) verwendet. Der Luftfilter kann auch Bestandteil eines Luftfiltersystems einer Kabinenlüftung des Fahrzeugsystems sein.

Die erfindungsgemäße Lüfterhutze wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Darstellung eines Ausführungsbeispiels der erfindungsgemäßen Lüfterhutze innerhalb einer Kühlanordnung eines Fahrzeugsystems,
- Fig. 2: eine vergrößerte und geschnittene Seitenansicht etwa des Details II in Fig. 1, und
- Fig. 3: eine perspektivische Teilansicht der Lüfterhutze gemäß Fig. 1.

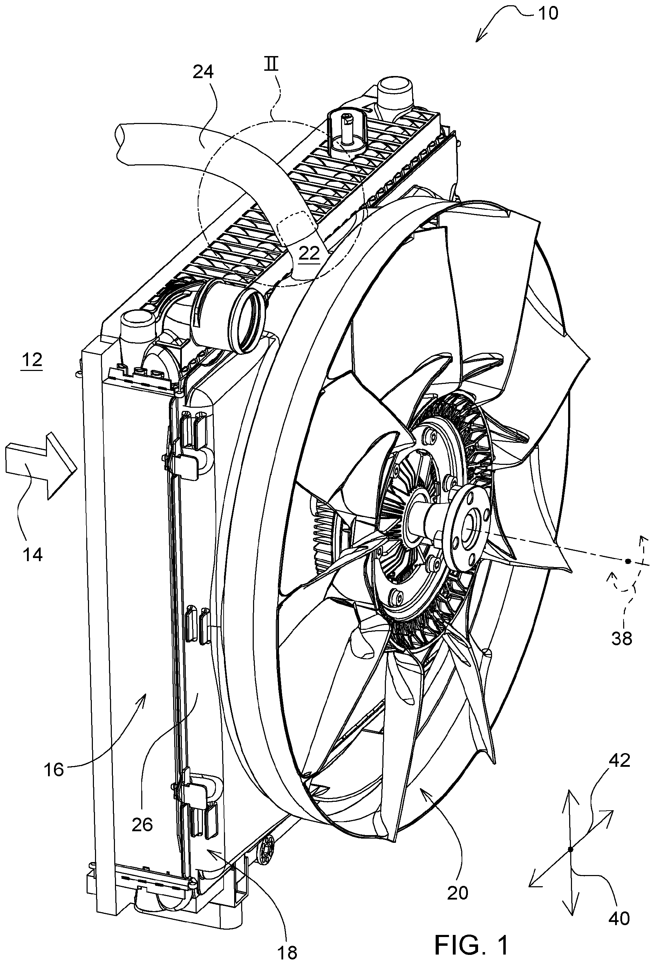

Fig. 1 zeigt Komponenten einer Kühlanordnung 10 eines Fahrzeugsystems, z.B. eines landwirtschaftlichen Nutzfahrzeugs, insbesondere eines Traktors. Dabei durchströmt Kühlluft 12 entlang eines Strömungspfades 14 nacheinander einen Motorkühler bzw. Wärmetauscher 16, eine Lüfterhutze 18 und einen Hauptventilator bzw. Axiallüfter 20. Der Wärmetauscher 16 ist Bestandteil eines hier nicht näher dargestellten Kühlkreislaufes zur Kühlung eines Verbrennungsmotors des Fahrzeugsystems. Der Vollständigkeit halber sei angemerkt, dass eine Verwendung der Lüfterhutze 18 nicht auf Wärmetauscher zur Kühlung eines Verbrennungsmotors beschränkt sein muss. Vielmehr kann es sich auch um einen separat gekühlten Ladeluftkühler oder dergleichen handeln. Auch kann anstelle des Axiallüfters 20 ein Radiallüfter oder allgemein eine Unterdruckerzeugungseinrichtung beliebiger Bauart vorgesehen sein.

Die Lüfterhutze 18 wirkt als eine Ansaugstufe zum Ansaugen externer Partikel, welche dann von dem Axiallüfter 20 infolge dessen rotatorischer Lüfterbewegungen an die Umgebung abtransportiert werden. Zum Ansaugen der Partikel weist die Lüfterhutze 18 einen Ansaugstutzen 22 auf, an den eine Saugleitung 24 angeschlossen ist. Letztere führt zu einem hier nicht dargestellten Luftfilter des Fahrzeugsystems. In dem Filtergehäuse des Luftfilters sammeln sich aufgrund des Filtereffektes vorabgeschiedene Partikel an, welche über die Saugleitung abgesaugt werden sollen.

Der im Ausführungsbeispiel etwa rechteckige oder quadratische Querschnitt eines Gehäuserahmens 26 der Lüfterhutze 18 ist in seinem bezüglich der in Fig. 1 erkennbaren Einbaulage oberen Bereich von einer Anschlussöffnung 28 durchsetzt. Gemeinsam mit dem Anschlussstutzen 22 dient die Anschlussöffnung 28 dazu, externe Partikel von dem bereits erwähnten Luftfilter anzusaugen. Ein entsprechender Partikelstrom bzw. Saugstrom 30 durchströmt den Gehäuserahmen 26 entlang einer Strömungsrichtung 32.

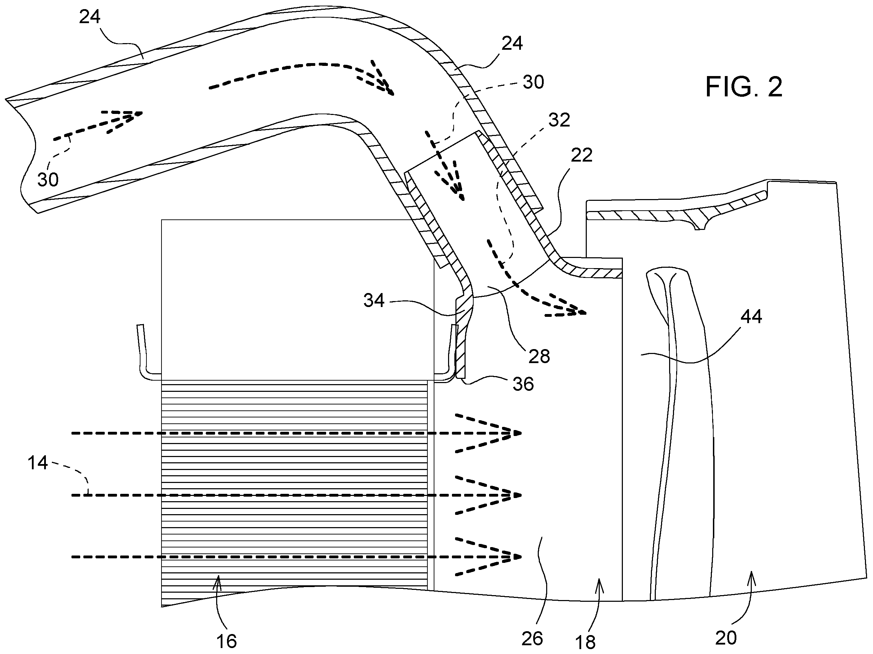

In Fig. 2 ist erkennbar, dass ausgehend von der Anschlussöffnung 28 der Anschlussstutzen 22 sich in Richtung außerhalb des Gehäuserahmens 26 erstreckt. Eine Trennwand 34 erstreckt sich ausgehend von der Anschlussöffnung 28 in Richtung innerhalb des Gehäuserahmens 26. Dabei ist die Trennwand 34 bezüglich der Strömungsrichtung 32 hinter dem Partikelstrom bzw. Saugstrom 30 angeordnet. Die Trennwand 34 ist zumindest abschnittsweise bis zu ihrem Freiende 36 etwa parallel zu einer durch die Umfangsrichtung 38 des Gehäuserahmens 26 aufgespannten Rahmenebene angeordnet. Diese gedachte Rahmenebene verläuft parallel zu einer durch die Hochrichtung 40 und die Querrichtung 42 aufgespannten Ebene des Fahrzeugsystems.

Weiterhin ist Fig. 2 entnehmbar, dass die Trennwand 34 bezüglich des Saugstromes 30 als eine Art rückspringende Stufe wirkt, deren Freiende 36 verhältnismäßig scharfkantig ausgebildet ist. Die Ausgestaltung und Anordnung der Trennwand 34 bewirkt innerhalb des Gehäuserahmens 26 bzw. innerhalb der Lüfterhutze 18 eine Trennung des Strömungspfades 14 und des Saugstromes 30 entlang der Strömungsrichtung 32 voneinander. Mit anderen Worten werden der Strömungspfad 14 und der Saugstrom 30 durch die Trennwand 34 entkoppelt. Die Trennwand 34 kann deshalb den durch den Axiallüfter 20 im niederdruckseitigen Bereich 44 aufgebauten Unterdruck stabilisieren und verstärken.

In Fig. 1 und Fig. 2 ist weiterhin erkennbar, dass sich der Anschlussstutzen 22 ausgehend von der Anschlussöffnung 28 bezüglich der Strömungsrichtung 32 des Saugstromes 30 nach hinten geneigt erstreckt.

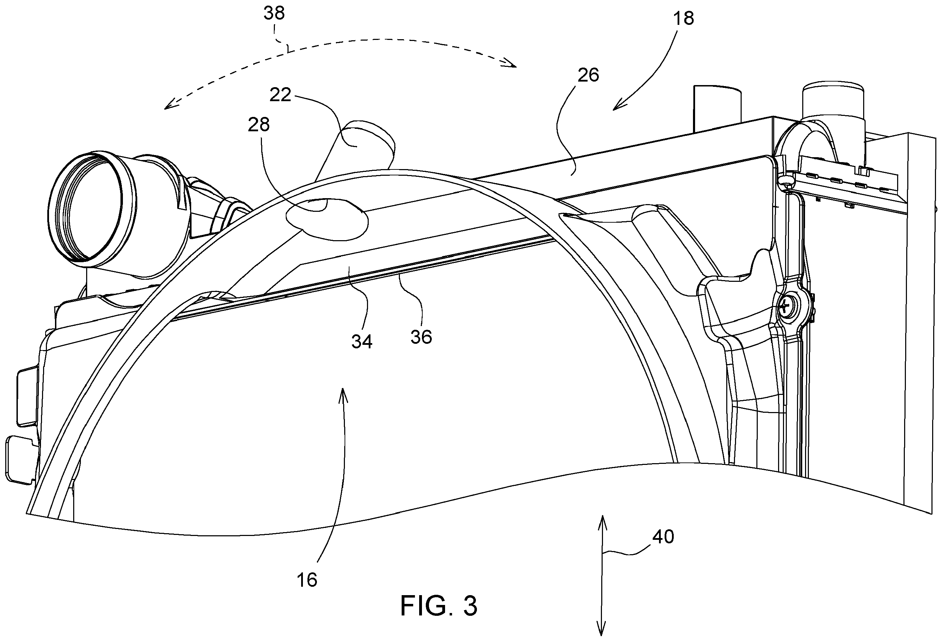

In Fig. 3 ist erkennbar, dass sich der Anschlussstutzen 22 ausgehend von der Anschlussöffnung 28 abweichend von der Hochrichtung 40 auch in Umfangsrichtung 38 geneigt erstreckt.

## Patentansprüche

1. Lüfterhutze (18) für ein Fahrzeugsystem, mit einem in einer Umfangsrichtung (38) verlaufenden Gehäuserahmen (26), welcher von einer Anschlussöffnung (28) zum Ansaugen externer Luft und/oder externer Partikel (30) durchsetzt ist, wobei der Gehäuserahmen (26) von dem angesaugten Luft- und/oder Partikelstrom als ein Saugstrom (30) entlang einer Strömungsrichtung (32) durchströmbar ist und wobei ausgehend von der Anschlussöffnung (28)
- ein Anschlussstutzen (22) sich in Richtung außerhalb des Gehäuserahmens (26) erstreckt, und
- eine Trennwand (34) sich in Richtung innerhalb des Gehäuserahmens (26) erstreckt,
**dadurch gekennzeichnet, dass** der Anschlussstutzen (22) und die Trennwand (34) einstückiger Bestandteil der Lüfterhutze (18) sind.

2. Lüfterhutze nach Anspruch 1, **dadurch gekennzeichnet, dass** die Trennwand (34) bezüglich der Strömungsrichtung (32) hinter dem Saugstrom (30) angeordnet ist.

3. Lüfterhutze nach Anspruch 1 oder 2, **dadurch gekennzeichnet, dass** die Trennwand (34) etwa parallel zu einer durch die Umfangsrichtung (38) aufgespannten Rahmenebene des Gehäuserahmens (26) angeordnet ist.

4. Lüfterhutze nach einem der vorhergehenden Ansprüche, **dadurch gekennzeichnet, dass** sich der Anschlussstutzen (22) ausgehend von der Anschlussöffnung (28) bezüglich der Strömungsrichtung (32) entgegen dieser Strömungsrichtung (32) geneigt erstreckt.

5. Lüfterhutze nach einem der vorhergehenden Ansprüche, **dadurch gekennzeichnet, dass** sich der Anschlussstutzen (22) ausgehend von der Anschlussöffnung (28) in Umfangsrichtung (38) des Gehäuserahmens (26) geneigt erstreckt.

6. Lüfterhutze nach einem der vorhergehenden Ansprüche, **gekennzeichnet durch** deren Verwendung als eine Ansaugstufe an einem Axial- oder Radiallüfter (20) einer Kühlanordnung (10) des Fahrzeugsystems.

## Claims

1. Fan casing (18) for a vehicle system, having a housing frame (26) which runs in a circumferential direction (38) and which is penetrated by a connection opening (28) for suctioning external air and/or external particles (30), wherein the suction air flow and/or particle flow is able to flow through the housing frame (26) as a suction flow (30) along a direction of flow (32) and wherein, starting from the connection opening (28),
- a connection port (22) extends in the direction outside the housing frame (26), and
- a partition (34) extends in the direction within the housing frame (26),
**characterized in that** the connection port (22) and the partition (34) are an integral component part of the fan casing (18).

2. Fan casing according to Claim 1, **characterized in that** the partition (34) relative to the direction of flow (32) is disposed downstream of the suction flow (30).

3. Fan casing according to Claim 1 or 2, **characterized in that** the partition (34) is disposed so as to be approximately parallel to a frame plane of the housing frame (26) that is defined by the circumferential direction (38).

4. Fan casing according to one of the preceding claims, **characterized in that**, relative to the direction of flow (28), starting from the connection opening (28), the connection port (22) extends so as to be inclined counter to this direction of flow (32).

5. Fan casing according to one of the preceding claims, **characterized in that**, starting from the connection opening (28), the connection port (22) extends so as to be inclined in the circumferential direction (38) of the housing frame (26).

6. Fan casing according to one of the preceding claims, **characterized by** the use thereof as a suction stage on an axial or radial fan (20) of a cooling assembly (10) of the vehicle system.

## Revendications

1. Écope de ventilateur (18) destinée à un système de véhicule, ladite écope comprenant un cadre de boîtier (26) qui s'étend dans une direction circonférentielle (38) et à travers lequel est ménagée une ouverture de raccordement (28) destinée à aspirer de l'air extérieur et/ou des particules extérieures (30), le cadre de boîtier (26) pouvant être traversé par le flux d'air et/ou de particules aspiré en tant que flux d'aspiration (30) suivant une sens d'écoulement (32) et, depuis l'ouverture de raccordement (28),
- une pièce de raccordement (22) s'étendant dans une direction à l'extérieur du cadre de boîtier (26), et
- une paroi de séparation (34) s'étendant dans une direction à l'intérieur du cadre de boîtier (26),
**caractérisée en ce que** la pièce de raccordement (22) et la paroi de séparation (34) font partie intégrante de l'écope de ventilateur (18).

2. Écope de ventilateur selon la revendication 1, **caractérisée en ce que** la paroi de séparation (34) est disposée en arrière du flux d'aspiration (30) par rapport au sens d'écoulement (32).

3. Écope de ventilateur selon la revendication 1 ou 2, **caractérisée en ce que** la paroi de séparation (34) est disposée sensiblement parallèlement à un plan du cadre de boîtier (26) passant par la direction circonférentielle (38).

4. Écope de ventilateur selon l'une des revendications précédentes, **caractérisée en ce que** la pièce de raccordement (22) s'étend de manière inclinée depuis l'ouverture de raccordement (28) par rapport au sens d'écoulement (32) dans le sens opposé à ce sens d'écoulement (32).

5. Écope de ventilateur selon l'une des revendications précédentes, **caractérisée en ce que** la pièce de raccordement (22) s'étend de manière inclinée depuis l'ouverture de raccordement (28) dans la direction circonférentielle (38) du cadre de boîtier (26) .

6. Écope de ventilateur selon l'une des revendications précédentes, **caractérisée en ce qu'**elle est utilisée comme étage d'aspiration d'un ventilateur axial ou radial (20) d'un ensemble de refroidissement (10) du système de véhicule.
